# EUROPEAN PATENT APPLICATION

(11) **EP 2 261 934 A1**
(43) Date of publication of application: **15.12.2010**
(21) Application number: 09716173.1
(22) Date of filing: 27.02.2009
(51) Int. Cl.: H01G 9/058, H01M 4/02, H01M 4/04, H01M 4/62

(54) **IONIC LIQUID-CONTAINING ELECTRODE MEMBRANE AND ELECTRODE, PROCESS FOR PRODUCING THE ELECTRODE MEMBRANE AND THE ELECTRODE, AND ELECTRIC STORAGE DEVICE**

(30) Priority: 29.02.2008 JP 2008049508
(71) Applicant: Sumitomo Chemical Company, Limited, Tokyo 104-8260 (JP)
(72) Inventor: EGUCHI, Hironori, Chiba 299-0125 (JP); SHIBUTA, Takumi, Chiba (JP); SAKAYA, Taiichi, deceased (JP)
(74) Representative: Vossius & Partner
(86) International application number: PCT/JP2009/054235
(87) International publication number: WO 2009/107875

(57) **Abstract**

The electrode film of the present invention includes electrode material particles having an average particle diameter of Da, solid particles having an average particle diameter of Db, and an ionic liquid, wherein Da and Db satisfy a formula Db/Da ≤ 1.0 × 10⁻¹. This electrode film is fabricated into an electrode in which the electrode film is stacked on a current collector. The electrode film is produced by a method including a step of dispersing electrode material particles having an average particle diameter of Da, solid particles having an average particle diameter of Db, and an ionic liquid in a liquid medium to obtain a dispersion liquid, a step of applying the dispersion liquid onto a support to form a dispersion liquid film, a step of removing the liquid medium from the dispersion liquid film to form an electrode film on the support, and a step of removing the support to isolate the electrode film. If a current collector is used as the support, an electrode is produced. This electrode can be incorporated in an electric energy storage device.

## Description

### TECHNICAL FIELD

The present invention relates to an electrode film containing solid particles and an ionic liquid. The present invention also relates to an electrode in which the aforementioned electrode film is stacked on a current collector. Moreover, the present invention relates to an electric energy storage device having the electrode.

### BACKGROUND ART

Electric energy storage devices, which have electrodes each composed of an electrode film and a current collector, are desired to be capable of being charged and discharging rapidly, and in order to attain the requirement, it is required that the electrode film be low in electrical resistance (in other words, the electrical conductivity of the electrode film is high) or that the contact resistance between the current collector and the electrode film be low. In order to realize an electric energy storage device which is small in size but large in capacitance, an electrochemically inert electrode film with a high density is needed. Moreover, the electrode film is also required to be able to be produced at a low cost.

In order to solve the problem with respect to the improvement in electrical conductivity, JP 2006-253025 A discloses a transparent conductive composition with good electrical conductivity which comprises a conductive inorganic oxide, an ionic liquid, and a binder resin. On the other hand, JP 2007-520032 A discloses an electrode which comprises a positive electrode active material based on a lithium-containing metal composite oxide or a chalcogenide compound, and an ionic liquid.

However, conventional electrode films are insufficient with respect to electrical resistance or film density. The object of the present invention is to provide an electrode film with a low electrical resistance and a high film density, thereby providing an electrode which is excellent in electrical conductivity or volumetric efficiency and an electric energy storage device which is excellent in electrical conductivity or volumetric efficiency.

### DISCLOSURE OF THE INVENTION

The present invention relates to an electrode film and a method for the production thereof, the electrode film comprising electrode material particles having an average particle diameter of Da, solid particles having an average particle diameter of Db, and an ionic liquid, wherein Da and Db satisfy a formula Db/Da ≤ 1.0 × 10⁻¹.

The present invention also relates to an electrode comprising a current collector and an electrode film with the aforementioned configuration stacked on the current collector and a method for the production thereof.

Further, the present invention relates to an electric energy storage device (typically, an electric double layer capacitor) comprising
at least one cell comprising two electrodes arranged so that they may oppose each other and a separator disposed between both electrode films,
an electrolytic solution, and
a container in which the at least one cell and the electrolytic solution have been enclosed, wherein each of the electrodes is an electrode of the present invention and the two electrodes are arranged so that their electrode films may be opposed to each other.

### MODE FOR CARRYING OUT THE INVENTION

The electrode film of the present invention comprises electrode material particles, solid particles, and an ionic liquid, wherein the relationship between the average particle diameter Da of the electrode material particles and the average particle diameter Db of the solid particles is Db/Da ≤ 1.0 × 10⁻¹, preferably 1.0 × 10⁻⁷ ≤ Db/Da ≤ 1.0 × 10⁻¹, and more preferably 1.0 × 10⁻⁵ ≤ Db/Da ≤ 1.0 × 10⁻¹, from the viewpoints of the adhesiveness of the electrode material particles A and the solid particles B and the density of the electrode film to be obtained.

It is permissible to use two or more sorts of electrode material particles differing in average particle diameter in combination. In such a case, the average particle diameter of the electrode material particles with the largest average particle diameter is defined as Da.

The electrode material particles in the present invention are particles composed of an electrode material, and the electrode material is not restricted with respect to its composition if it is a conductor. The electrode material as used in the present invention refers to a substance which emits or gains electrons through charging/discharging. While a substance that emits an electron is called a negative electrode active material and a substance that gains an electron is called a positive electrode active material, since one active material is used as both a negative electrode active material and a positive electrode active material in some electric energy storage devices, such as an electric double layer capacitor, a positive electrode active material and a negative electrode active material in such an electric energy storage device may be collectively called active materials for capacitors.

Examples of positive electrode active materials include oxides and chalcogenides of transition metal elements, such as titanium, vanadium, chromium, manganese, iron, cobalt, nickel, copper, niobium, and molybdenum, the oxides and chalcogenides containing conductive ions. Examples of the conductive ions include alkali metal ions and alkaline earth metal ions, and particularly preferred conductive ions are lithium ion and sodium ion. Specific positive electrode active materials include cobalt/lithium mixed oxides and lithium mixed oxides containing nickel and aluminum or a transition other than nickel, which are used for lithium ion secondary batteries. Each positive electrode active material may be used singly and two or more positive electrode active materials may be used in combination.

Examples of the negative electrode active materials include light metals, light metal alloys, carbon compounds, inorganic oxides, inorganic chalcogenides, metal complexes, and organic polymer compounds, and preferred negative electrode active materials are carbon compounds. Carbon compounds are compounds which contain carbon as an ingredient. Each negative electrode active material may be used singly and two or more negative electrode active materials may be used in combination. Preferred combinations of negative electrode active materials include a combination of a light metal and a carbon compound, a combination of a light metal and an inorganic oxide, and a combination of a light metal, a carbon compound, and an inorganic oxide.

The active material for capacitors may be any conductor with a large specific surface area for capacitors, and conductors having a specific surface area of 1000 cm²/g or more are used. Particularly preferred active material for capacitors are carbonaceous materials. Graphite-based materials, such as natural graphite, artificial graphite, graphitized mesocarbon microbeads, graphite whisker, graphitized carbon fiber and vapor growth carbon fiber; easily graphitizable carbonaceous materials obtained by heat-treating carbonization fuels, such as coal coke, petroleum coke, and pitch coke; calcined products of furfuryl alcohol resin, calcined products of novolac resin, calcined products of phenol resin, calcined products of polyacrylonitrile resin, calcined products of rayon; activated carbon; carbon black, such as acetylene black and Ketchen black; and high capacity carbonaceous substances, such as glassy carbon, carbon nanotube, and carbon nanosphere, for example, are preferred as the carbonaceous substances. Activated carbon is more preferred. Activated carbon is produced by carbonizing or activating a plant-derived carbon source, such as sawdust and coconut shell, a coal/petroleum-derived carbon source, such as coke and pitch, or a synthetic polymer-based carbon source, such as phenol resin, furfuryl alcohol resin, and vinyl chloride resin. Each active material for capacitors may be used singly and two or more active materials for capacitors may be used in combination.

From the viewpoints of the strength and chemical stability of an electrode film, the average particle diameter Da of the electrode material particles is preferably within the range of from 10 nm to 100 µm, more preferably within the range of from 1 µm to 30 µm. In the present invention, the average particle diameter of electrode material particles is an average particle diameter measured by the use of a laser diffraction/scattering particle size distribution analyzer.

In the present invention, the electrode material particles are not limited in shape. From the viewpoints of the force of binding solid particles which constitute an electrode film together and the force of binding the electrode material particles themselves, the electrode material particles preferably are spherical, rod-like or chain-like in shape and preferably are chain-like particles composed of linked spherical particles.

The solid particles in the present invention are particles which are neither oxidized nor reduced by charging/discharging. That is, the solid particles are particles which are inert (in other words, resistant to oxidation and reduction) in the range of the oxidation-reduction potential (in other words, potential window) of electrode material particles. The solid particles have an action to bind electrode material particles themselves. Moreover, when the electrode film of the present invention is combined with a current collector to constitute an electrode, the solid particles act to bind the electrode film to the current collector.

Regarding the solid particles, while the kind of the substance which constitutes the solid particles is not restricted if the substance is inert within the range of the oxidation-reduction potential of electrode material particles, the solid particles are preferably inorganic particles, more preferably silica particles, alumina particles, or mixed particles composed of silica particles and alumina particles, and more preferably silica particles from the viewpoints of the force of binding electrode material particles and the heat resistance of an electrode film.

Examples of spherical silica particles include SNOWTEX ST-XS and SNOWTEX ST-XL produced by Nissan Chemical Industries, Ltd., and examples of chain-like silica particles include SNOWTEX PS-S and SNOWTEX PS-SO produced by Nissan Chemical Industries, Ltd. "SNOWTEX" is a registered trademark in Japan.

From the viewpoint of the force of binding electrode material particles, the average particle diameter Db of the solid particles is preferably within the range of from 1 nm to 100 nm, more preferably within the range of from 1 nm to 50 nm. In the present invention, the average particle diameter of solid particles is an average particle diameter measured by the use of a laser diffraction/scattering particle size distribution analyzer.

In the present invention, the solid particles are not limited in shape. From the viewpoint of the force of binding electrode material particles, the solid particles preferably are spherical, rod-like or chain-like, and preferably are chain-like particles composed of linked spherical particles.

The content of the solid particles in the electrode film of the present invention is preferably within the range of 1 to 100 parts by weight relative to 100 parts by weight of the electrode material particles from the viewpoints of the strength and chemical stability of the electrode film. Also in view of the density of the electrode film, the content of the solid particles is more preferably within the range of 1 to 70 parts by weight, and even more preferably within the range of 20 to 45 parts by weight.

The ionic liquid in the present invention is a salt of an organic compound having a charge and it is also called an ambient temperature molten salt or a room temperature molten salt. Examples of an ionic liquid applicable to the present invention include imidazolium salts, pyridinium salts, pyrrolidinium salts, phosphonium salts, ammonium salts, guanidinium salts, isouronium salts, and isothiouronium salts given below.

### (Imidazolium salts)

1,3-Dimethyl imidazolium trifluoromethanesulfonate, 1-ethyl-3-methylimidazolium bis[oxalate (2-)]borate, 1-ethyl-3-methylimidazolium tetrafluoroborate, 1-ethyl-3-methylimidazolium bromide, 1-ethyl-3-methylimidazolium chloride, 1-ethyl-3-methylimidazolium hexafluorophosphate, 1-ethyl-3-methylimidazolium trifluoromethanesulfonate, 1-ethyl-3-methylimidazolium trifluoroacetate, 1-ethyl-3-methylimidazolium methylsulfate, 1-ethyl-3-methylimidazolium p-toluenesulfonate, 1-ethyl-3-methylimidazolium thiocyanate, 1-butyl-3-methylimidazolium trifluoromethanesulfonate, 1-butyl-3-methylimidazolium tetrafluoroborate, 1-butyl-3-methylimidazolium hexafluorophosphate, 1-butyl-3-methylimidazolium methylsulfate, 1-butyl-3-methylimidazolium chloride, 1-butyl-3-methylimidazolium bromide, 1-butyl-3-methylimidazolium trifluoroacetate, 1-butyl-3-methylimidazolium octylsulfate, 1-hexyl-3-methylimidazolium bis(trifluoromethylsulfonyl)imide, 1-hexyl-3-methylimidazolium chloride, 1-hexyl-3-methylimidazolium tetrafluoroborate, 1-hexyl-3-methylimidazolium hexafluorophosphate, 1-hexyl-3-methylimidazolium tris(pentafluoroethyl)trifluorophosphate, 3-methyl-1-octylimidazolium hexafluorophosphate, 3-methyl-1-octylimidazolium chloride, 3-methyl-1-octylimidazolium tetrafluoroborate, 3-methyl-1-octylimidazolium bis(trifluoromethylsulfonyl)imide, 3-methyl-1-octylimidazolium octylsulfate, 3-methyl-1-tetradecylimidazolium tetrafluoroborate, 1-hexadecyl-3-methylimidazolium chloride, 3-methyl-1-octadecylimidazolium hexafluorophosphate, 3-methyl-1-octadecylimidazolium bis(trifluoromethylsulfonyl)imide, 3-methyl-1-octadecylimidazolium tri(pentafluoroethyl)trifluorophosphate, 1-ethyl-2,3-dimethylimidazolium bromide, 1-ethyl-2,3-dimethylimidazolium tetrafluoroborate, 1-ethyl-2,3-dimethylimidazolium hexafluorophosphate, 1-ethyl-2,3-dimethylimidazolium chloride, 1-ethyl-2,3-dimethylimidazolium p-toluene sulfonate, 1-butyl-2,3-dimethylimidazolium tetrafluoroborate, 1-butyl-2,3-dimethylimidazolium chloride, 1-butyl-2,3-dimethylimidazolium hexafluorophosphate, 1-butyl-2,3-dimethylimidazolium octylsulfate, 1-hexyl-2,3-dimethylimidazolium chloride, and 1-hexadecyl-2,3-dimethylimidazolium chloride.

### (Pyridinium salts)

N-Ethylpyridinium chloride, N-ethylpyridinium bromide, N-butylpyridinium chloride, N-butylpyridinium tetrafluoroborate, N-butylpyridinium hexafluoro phosphate, N-butylpyridinium trifluoromethanesulfonate, N-hexylpyridinium tetrafluoroborate, N-hexylpyridinium hexafluorophosphate, N-hexylpyridinium bis(trifluoromethylsulfonyl)imide, N-hexylpyridinium trifluoromethanesulfonate, N-octylpyridinium chloride, 4-methyl-N-butylpyridinium chloride, 4-methyl-N-butylpyridinium tetrafluoroborate, 4-methyl-N-butylpyridinium hexafluorophosphate, 3-methyl-N-butylpyridinium chloride, 4-methyl-N-butylpyridinium bromide, 3,4-dimethyl-N-butylpyridinium chloride, and 3,5-dimethyl-N-butylpyridinium chloride.

### (Pyrrolidinium salts)

1-Butyl-1-methylpyrrolidinium chloride, 1-butyl-1-methylpyrrolidinium trifluoromethanesulfonate, 1-butyl-1-methylpyo-rolidinium bis(trifluoromethylsulfonyl)imide, 1-butyl-1-methylpyrrolidinium tetrafluoroborate, 1-butyl-1-methylpyrrolidinium hexafluorophosphate, 1-butyl-1-methylpyrrolidinium tris(pentafluoroethyl)trifluorophosphate, 1-butyl-1-methylpyrrolidinium trifluoroacetate, 1-hexyl-1-methylpyrrolidinium chloride, and 1-methyl-1-octylpyrrolidinium chloride.

### (Phosphonium salts)

Trihexyl (tetradecyl)phosphonium chloride, trihexyl(tetradecyl)phosphonium tris(pentafluoroethyl)trifluorophosphate, trihexyl(tetradecyl)phosphonium tetrafluoroborate, trihexyl(tetradecyl)phosphonium bis(trifluoromethylsulfonyl)imide, trihexyl(tetradecyl)phosphonium hexafluorophosphate, and trihexyl(tetradecyl)phosphonium bis[oxalate(2-)]borate.

### (Ammonium salts)

Methyltrioctylammonium trifluoroacetate, methyltrioctylammonium trifluoromethanesulfonate, and methyltrioctylammonium bis(trifluoromethylsulfonyl)imide.

### (Guanidinium salts)

N"-Ethyl-N,N,N',N'-tetramethylguanidinium tris(pentafluoroethyl) trifluoro phosphate, guanidinium tris(pentafluoroethyl)trifluorophosphate, guanidinium trifluoromethanesulfonate, and N"-ethyl-N,N,N',N'-tetramethylguanidinium trifluoromethanesulfonate.

### (Isouronium salts)

O-Ethyl-N,N,N',N'-tetramethylisouronium trifluoromethanesulfonate, and O-ethyl-N,N,N',N'-tetramethylisouronium tri(pentafluoroethyl)trifluorophosphate.

### (Isothiouronium salts)

S-Ethyl-N,N,N',N'-tetramethylisothiouronium trifluoromethanesulfonate, and S-ethyl-N,N,N',N'-tetramethylisothiouronium tris(pentafluoroethyl)trifluorophosphate.

Imidazolium salts are preferred as the aforementioned ionic liquid from the viewpoint of the ease of obtaining or handling, and 1-ethyl-3-methylimidazolium tetrafluoroborate is particularly preferred.

From the viewpoints of the film density and resistance of the electrode film, the content of the ionic liquid in the electrode film of the present invention is preferably within the range of 0.01 to 8 parts by weight relative to 100 parts by weight of the electrode material particles, more preferably within the range of 0.5 to 5 parts by weight, and even more preferably within the range of 1 to 4 parts by weight.

The electrode of the present invention has a current collector and an electrode film stacked on the current collector, and the electrode film is the electrode film of the present invention, namely, the aforementioned electrode film comprising electrode material particles having an average particle diameter of Da, solid particles having an average particle diameter of Db, and an ionic liquid, wherein the Da and the Db satisfy a formula Db/Da ≤ 1.0 × 10⁻¹. The current collector is usually foil of metal, and examples of the metal include aluminum, copper and iron. In particular, aluminum is preferred because of its light weight and low electric resistance. The current collector preferably is in the form of a film having a thickness within the range of 20 µm to 100 µm because it is easy to manufacture a wound electrode or a laminated electrode therefrom. In order to improve the adhesiveness between the current collector and the electrode film, it is preferable that the surface of the current collector be roughened by etching or the like.

Next, the electrode film of the present invention and the method for producing an electrode of the present invention are described.

The electrode film of the present invention can be a sheet forming method in which a mixture containing electrode material particles, solid particles, and an ionic liquid is formed into a sheet by using a roll-molding technology or a press-molding technology, or an applying method in which a dispersion liquid film is formed by applying, to a support, a dispersion liquid in which electrode material particles, solid particles, and an ionic liquid are dispersed in a dispersion medium, and then the liquid medium is removed from the dispersion liquid film. As is clear from the above description, the electrode material particles and the solid particles to be used for producing the electrode film of the present invention are particles that satisfy a formula Db/Da ≤ 1.0 × 10⁻¹ wherein Da is the average particle diameter of the electrode material particles and Db is the average particle diameter of the solid particles.

In the sheet forming method, prescribed amounts of electrode material particles, solid particles, and an ionic liquid are charged into a mixing machine and are mixed therein to give a paste mixture. At this time, addition of a small amount of liquid medium can improve the uniformity of the mixture. Next, the paste mixture is shaped into a sheet form by using a roll-molding machine, such as a calender molding machine, or a press molding machine, so that the electrode film of the present invention can be obtained. If a liquid medium remains in the electrode film, it is evaporated to remove.

It is preferable to produce an electrode film by the application method because a film uniform in thickness can be easily formed thereby. The production of the electrode film of the present invention by the applying method is described in detail. First, a dispersion liquid is prepared by dispersing electrode material particles, solid particles, and an ionic liquid in a liquid medium. Subsequently, a dispersion liquid film is formed by applying the dispersion liquid to a support. Then, an electrode film composed of the electrode material particles, the solid particles, and the ionic liquid is formed on the support by removing the liquid medium from the dispersion liquid film. Finally, by peeling the electrode film from the support or removing the support by dissolving it, an independent electrode film can be obtained.

In the applying method, a dispersion liquid in which electrode material particles, solid particles, and an ionic liquid are dispersed in a liquid medium is prepared first. Examples of the method for preparing the dispersion liquid include method (1) to method (4) provided below, and method (3) is preferred from the viewpoints of the dispersion efficiency of particles and the simplicity of work processes. As a mixing machine can be used conventional mixing machines, such as a ball mill. In order to increase the application efficiency of a dispersion liquid, it is permissible to further add a liquid medium to adjust the solid concentration in performing methods (1) to (4).

Method (1): a method which involves adding prescribed amounts of electrode material particles, solid particles, and an ionic liquid to a liquid medium, and then mixing them.

Method (2): a method which involves adding prescribed amounts of solid particles and an ionic liquid to an intermediate dispersion liquid containing a liquid medium and a prescribed amount of electrode material particles dispersed therein, and then mixing them.

Method (3): a method which involves adding prescribed amounts of electrode material particles and an ionic liquid to an intermediate dispersion liquid containing a liquid medium and a prescribed amount of solid particles dispersed therein, and then mixing them.

Method (4): a method which involves mixing a first intermediate dispersion liquid containing a first liquid medium and a prescribed amount of electrode material particles dispersed therein, a second intermediate dispersion liquid containing a second liquid medium and a prescribed amount of solid particles dispersed therein, and an ionic liquid.

In order to form a dispersion liquid film by applying a dispersion liquid to a support, conventional applicators such as handy film applicators, bar coaters and die coaters may be used. By removing the liquid medium from the formed dispersion liquid film, it is possible to form an electrode film composed of the electrode material particles, the solid particles, and the ion on the support. The method of removing the liquid medium may be a method comprising evaporating the liquid medium at an appropriate temperature. When colloidal silica is used as the intermediate dispersion liquid in method (3) mentioned above or the second intermediate dispersion liquid in method (4) mentioned above, it is preferable, from the viewpoint of force of binding particles themselves in a film to be formed, to perform drying at a temperature of from 50 to 80°C for a time of from 1 to 30 minutes and further perform drying at a temperature of from 100 to 250°C for a time of from 1 to 6 hours. After forming an electrode film on a support by the applying method, the electrode film on the support may also be pressed for the purpose of adjusting the thickness of the electrode film or further increasing the density of the film.

By laminating the electrode film obtained by the above-described method to a current collector, the electrode of the present invention in which the electrode film of the present invention has been stacked on the current collector is obtained. When forming an electrode film by the above-described applying method, it is possible to produce the electrode of the present invention simultaneously with the formation of the electrode film by using a current collector as a support.

The electrode of the present invention can be used, for example, as an electrode of a chemical cell, such as a primary battery, a secondary battery, and a fuel cell, or an electric energy storage device, such as a redox capacitor, a hybrid capacitor, and an electric double layer capacitor.

More specifically, the present invention provides an electric energy storage device comprising
at least one cell comprising two electrodes arranged so that they may be opposed to each other and a separator disposed between both electrode films,
an electrolytic solution, and
a container in which the at least one cell and the electrolytic solution have been enclosed, wherein each of the electrodes is the above-described electrode of the present invention and the two electrodes are arranged so that their electrode films may be opposed to each other.

In one preferred embodiment, the electric energy storage device of the present invention is an electric double layer capacitor. Specific examples thereof include a capacitor in which a separator is disposed between two electrodes and an electrolyte is filled in between the separator and each of the electrodes, and a capacitor in which a solid electrolyte (gel electrolyte) is filled in between two electrodes.

In an electric double layer capacitor, when charging is performed, an electric double layer is formed from a positively charged positive electrode and a negatively charged electrolyte in the vicinity of the interface between the positive electrode and an electrolyte, and at the same time, an electrical double layer is formed from the negatively charged negative electrode and a positively charged electrolyte in the vicinity of the interface between the negative electrode and an electrolyte, so that electric energy is accumulated. Even if the charging is stopped, the electric double layers are maintained. When, discharging is performed, the electric double layers are eliminated, so that electric energy is released.

While an electric double layer capacitor may be a capacitor having only a single cell having two electrodes, that is, a pair of a positive electrode and a negative electrode, it may be a capacitor having two or more such cells.

The electrode of the present invention which contains an active material for capacitors as electrode material particles can be used suitably for an electric double layer capacitor filled with an electrolytic solution. More specifically, such an electric double layer capacitor has at least one cell comprising two electrodes which each comprise a current collector and an electrode film stacked on the current collector and are arranged so that the electrode films may oppose each other, and a separator disposed between the electrode films, an electrolytic solution, and a container in which the at least one cell and the electrolytic solution have been enclosed. Specific examples include a coin type capacitor in which a cell and an electrolytic solution are enclosed together in a coin-shaped container, wherein the cell is one in which two disc-shaped electrodes are arranged with their electrode films facing each other and a separator is disposed between the electrode films; a cylindrical capacitor in which a cell in which two sheet-shaped electrodes are arranged with their electrode films facing each other and a separator is further disposed between the electrode films has been wound and the wound unit is enclosed together with an electrolytic solution in a cylindrical container; a laminated capacitor comprising film-like electrodes and a separator laminated together; and a bellows-shaped capacitor.

In another preferred embodiment of the present invention, the electric energy storage device of the present invention is a secondary battery. Specific examples thereof include a secondary battery in which a separator is disposed between two electrodes and an electrolytic solution is filled in between the separator and each of the electrodes, and a secondary battery in which an electrolyte (gel electrolyte) is filled in between two electrodes.

While a secondary battery may be a secondary battery having only a single cell having two electrodes, namely, a pair of a positive electrode and a negative electrode, it may be a secondary battery having two or more such cells.

The electrode of the present invention which contains a positive electrode active material and a positive electrode active material as electrode material particles can be used suitably for a secondary battery filled with an electrolytic solution. More specifically, such a secondary battery has at least one cell comprising two electrodes which each comprise a current collector and an electrode film stacked on the current collector and are arranged so that the electrode films may oppose each other, and a separator disposed between the electrode films, an electrolytic solution, and a container in which the at least one cell and the electrolyte have been enclosed. Specific examples include a coin type secondary battery in which a cell and an electrolytic solution are enclosed together in a coin-shaped container, wherein the cell is one in which two disc-shaped electrodes are arranged with their electrode films facing each other and a separator is disposed between the electrode films; a cylindrical secondary battery in which a cell in which two sheet-shaped electrodes are arranged with their electrode films facing each other and a separator is further disposed between the electrode films has been would and the wound unit is enclosed together with an electrolytic solution in a cylindrical container; a laminated secondary battery comprising film-like electrodes and a separator laminated together; and a bellows-shaped secondary battery.

As the electrolyte can be used conventional electrolytes. The electrolyte may be in a molten state, in a solid state, or in a mixture with a solvent. The electrolyte may be either an inorganic electrolyte or an organic electrolyte. An inorganic electrolyte is usually mixed with water to form an electrolytic solution. An organic electrolytes is usually mixed with a solvent mainly containing an organic polar solvent to form an electrolytic solution.

As a separator is used an insulating film having a high ion transmittance and a prescribed mechanical strength. Specific examples include papers of natural fibers, such as natural cellulose and Manila hemp; papers of regenerated fibers or synthetic fibers, such as rayon, vinylon, and polyester; mixed papers made by mixing natural fibers with regenerated fibers or synthetic fibers; nonwoven fabrics, such as polyethylene nonwoven fabric, polypropylene nonwoven fabric, polyester nonwoven fabric, and polybutylene terephthalate nonwoven fabric; films of porous plastic, such as porous polyethylene, porous polypropylene, and porous polyester; resin films, such as para wholly aromatic polyamide and fluorine-containing resins, e.g., vinylidene fluoride, tetrafluoroethylene, copolymers of vinylidene fluoride and propylene hexafluoride, fluororubber.

### EXAMPLES

The present invention is described more concretely below with reference to Examples, but the invention is not limited to the Examples.

Primary materials used are as follows.

### [Ionic liquid]

### 1-Ethyl-3-methylimidazolium tetrafluoroborate produced by Merck, Inc. [Electrode material particles]

(1) Activated carbon prepared by pulverizing RP-15 produced by Kuraray Chemical Co., Ltd. with a ball mill for 24 hours by the use of zirconia balls. When the pulverized activated carbon was analyzed using a laser diffraction/scattering particle size distribution analyzer (HORIBA LA910), the average particle diameter Da was from 5 µm to 9 µm.
(2) Lithium cobaltate (CELLSEED (registered trademark in Japan) C-5H produced by Nippon Chemical Industrial Co., Ltd.; average particle diameter Da: 6.6 µm)
(3) Acetylene black (50%-pressed DENKA BLACK produced by DENKI KAGAKU KOGYO KABUSHIKI KAISHA; average particle diameter: 36 nm)

### [Solid particles]

(1) Silica particles (colloidal silica produced by Nissan Chemical Industries, Ltd. "SNOWTEX PS-S"; average particle diameter Db: from 10 nm to 18 nm; solid concentration: 20% by weight)
(2) Silica particles (powdery silica "SEAHOSTAR (registered trademark in Japan) KEP100" produced by NIPPON SHOKUBAI Co., Ltd.; average particle diameter Db: from 0.95 to 1.25 µm)

### Example 1

A dispersion liquid with a solid concentration of 50% by weight was prepared by adding 3.0 g of colloidal silica to a mixture of 9.0 g of lithium cobaltate and 0.7 g of acetylene black, further adding 0.1 g of ionic liquid, and still further adding pure water. This dispersion liquid contained 9.0 g of lithium cobaltate, 0.7 g of acetylene black, 0.6 g of silica, and 0.1 g of ionic liquid. That is, the amount of solid particles relative to 100 parts by weight of electrode material particles was 6.66 parts by weight, and the amount of the ionic liquid relative to 100 parts by weight of the electrode material particles was 1.03 parts by weight. Db/Da was from 1.5 × 10⁻³ to 2.7 × 10⁻³. A dispersion liquid film was formed by applying the dispersion liquid to a 103 µm-thick PET with a handy film applicator. Then, water was removed by heating at 60°C for 1 hour and further at 150°C for 6 hours, so that a layered article comprising an electrode film stacked on the PET was obtained.

From the resulting layered article was cut out a layered article with a size of 3.0 cm × 3.0 cm, and then the volume resistivity of the electrode film was measured by the four-terminal method by using a resistivity meter (LORESTA (registered trademark in Japan) manufactured by DIA Instruments Co., Ltd.). The results were shown in Table 1.

### Comparative Example 1

A dispersion liquid was prepared in the same manner as in Example 1, except for using 0.6 g of powdery silica (SEAHOSTAR KEP100) instead of the colloidal silica. This dispersion liquid contained 9.0 g of lithium cobaltate, 0.7 g of acetylene black, 0.6 g of silica, and 0.1 g of ionic liquid. That is, the amount of solid particles relative to 100 parts by weight of electrode material particles was 1.03 parts by weight, and the amount of the ionic liquid relative to 100 parts by weight of the electrode material particles was 1.11 parts by weight. Moreover, Db/Da (lithium cobaltate) was from 1.4 × 10⁻¹ to 1.9 × 10⁻¹.

In the same manner as in Example 1, one layered article with a size of 3.0 cm × 3.0 cm was cut out, and then the volume resistivity of the electrode film was measured by the four-terminal method by using a resistivity meter (LORESTA manufactured by DIA Instruments Co., Ltd.). The results were shown in Table 1.

### Comparative Example 2

A dispersion liquid was prepared in the same manner as in Example 1, except for incorporating no ionic liquid. This dispersion liquid contained 9.0 g of lithium cobaltate, 0.7 g of acetylene black, and 0.6 g of silica. That is, the amount of solid particles B relative to 100 parts by weight of electrode material particles A was 1.03 parts by weight, and the amount of the ionic liquid relative to 100 parts by weight of the electrode material particles A was 0 parts by weight. Db/Da was from 1.5 × 10⁻³ to 2.7 × 10⁻³.

In the same manner as in Example 1, one layered article with a size of 3.0 cm × 3.0 cm was cut out, and then the volume resistivity of the electrode film was measured by the four-terminal method by using a resistivity meter (LORESTA manufactured by DIA Instruments Co., Ltd.). The results were shown in Table 1.

**[Table 1]**

| | Example 1 | Comparative Example 1 | Comparative Example 2 |
|---|---|---|---|
| Electrode material particles [g] | 9.7 | 9.7 | 9.7 |
| Solid particles [g] | 0.6 | 0.6 | 0.6 |
| Ionic liquid [g] | 0.1 | 0.1 | 0 |
| Volume resistivity [Ω•cm] | 429 | 1360 | 465 |
| Db/Da | 1.5 × 10⁻³ - 2.7 × 10⁻³ | 1.4 × 10⁻¹ - 1.9 × 10⁻¹ | 1.5 × 10⁻³ - 2.7 × 10⁻³ |
| Density [g/cm³] | 1.47 | 1.43 | 1.28 |

### Example 2

A dispersion liquid with a solid concentration of 30% by weight was prepared by adding 40.0 g of colloidal silica to a mixture of 16.0 g of activated carbon and 2.0 g of acetylene black, further adding 0.8 g of ionic liquid, and still further adding pure water. This dispersion liquid contained 16.0 g of activated carbon, 2.0 g of acetylene black, 8.0 g of silica, and 0.8 g of ionic liquid. That is, the amount of solid particles relative to 100 parts by weight of electrode material particles was 50 parts by weight, and the amount of the ionic liquid relative to 100 parts by weight of the electrode material particles was 4.44 parts by weight. A dispersion liquid film was formed by applying the dispersion liquid to a 20 µm-thick aluminum foil (current collector) with a handy film applicator. Then, water was removed by heating at 60°C for 1 hour and further at 240°C for 6 hours, so that an electrode comprising an electrode film stacked on the current collector was obtained.

From the resulting electrode were cut out two electrodes each having a size of 1.5 cm × 2.0 cm. They were fully dried and then were assembled in a glove box (nitrogen atmosphere) into an electric double layer capacitor illustrated in Fig. 2 by using stainless steel as a collector electrode. That is, the two electrodes were arranged so that the electrode film of one electrode would be opposed to the electrode film of the other electrode, and a natural cellulose paper (separator) was disposed between the electrode films to form a cell. The cell was enclosed together with an electrolytic solution (LIPASTE-P/TEMAF 14N, produced by Tomiyama Pure Chemical Industries, Ltd.) into an aluminum container to form an electric double layer capacitor.

The resulting electric double layer capacitor was subjected to a charging/discharging test by charging it at a constant current of 300 mA/g until the voltage reached 2.8 V, and then making it discharge at a constant current of 300 mA/g until the voltage became 0 V. From the relationship between a current and a voltage was approximately calculated an electrical resistance, and the result was given in Table 2. Moreover, the density of the electrode film used for the electric double layer capacitor was measured, and the result was given in Table 2.

### Example 3

A dispersion liquid was prepared in the same manner as in Example 2, except for using 0.6 g of 1-ethyl-3-methylimidazolium tetrafluoroborate as an ionic liquid. This dispersion liquid contained 16.0 g of activated carbon, 2.0 g of acetylene black, 8.0 g of silica, and 0.6 g of ionic liquid. That is, the amount of solid particles relative to 100 parts by weight of electrode material particles was 44.4 parts by weight, and the amount of the ionic liquid relative to 100 parts by weight of the electrode material particles was 3.33 parts by weight. Next, in the same manner as in Example 2, electrodes were produced, an electric double layer capacitor was fabricated, and a charging/discharging test was carried out. From the relationship between a current and a voltage was approximately calculated an electrical resistance, and the result was given in Table 2. Moreover, the density of the electrode film used for the electric double layer capacitor was measured, and the result was given in Table 2.

### Example 4

A dispersion liquid was prepared in the same manner as in Example 2, except for using 0.4 g of 1-ethyl-3-methylimidazolium tetrafluoroborate as an ionic liquid. This dispersion liquid contained 16.0 g of activated carbon, 2.0 g of acetylene black, 8.0 g of silica, and 0.4 g of ionic liquid. That is, the amount of solid particles relative to 100 parts by weight of electrode material particles was 44.4 parts by weight, and the amount of the ionic liquid relative to 100 parts by weight of the electrode material particles was 2.22 parts by weight. Next, in the same manner as in Example 2, electrodes were produced, an electric double layer capacitor was fabricated, and a charging/discharging test was carried out. From the relationship between a current and a voltage was approximately calculated an electrical resistance, and the result was given in Table 2. Moreover, the density of the electrode film used for the electric double layer capacitor was measured, and the result was given in Table 2.

### Example 5

A dispersion liquid was prepared in the same manner as in Example 2, except for using 0.2 g of 1-ethyl-3-methylimidazolium tetrafluoroborate as an ionic liquid. This dispersion liquid contained 16.0 g of activated carbon, 2.0 g of acetylene black, 8.0 g of silica, and 0.2 g of ionic liquid. That is, the amount of solid particles relative to 100 parts by weight of electrode material particles was 44.4 parts by weight, and the amount of the ionic liquid relative to 100 parts by weight of the electrode material particles was 1.11 parts by weight. Next, in the same manner as in Example 2, electrodes were produced, an electric double layer capacitor was fabricated, and a charging/discharging test was carried out. From the relationship between a current and a voltage was approximately calculated an electrical resistance, and the result was given in Table 2. Moreover, the density of the electrode film used for the electric double layer capacitor was measured, and the result was given in Table 2.

### Example 6

A dispersion liquid was prepared in the same manner as in Example 2, except for using 0.1 g of 1-ethyl-3-methylimidazolium tetrafluoroborate as an ionic liquid. This dispersion liquid contained 16.0 g of activated carbon, 2.0 g of acetylene black, 8.0 g of silica, and 0.1 g of ionic liquid. That is, the amount of solid particles relative to 100 parts by weight of electrode material particles was 44.4 parts by weight, and the amount of the ionic liquid relative to 100 parts by weight of the electrode material particles was 0.55 parts by weight. Next, in the same manner as in Example 2, electrodes were produced, an electric double layer capacitor was fabricated, and a charging/discharging test was carried out. From the relationship between a current and a voltage was approximately calculated an electrical resistance, and the result was given in Table 2. Moreover, the density of the electrode film used for the electric double layer capacitor was measured, and the result was given in Table 2.

### Comparative Example 3

A dispersion liquid was prepared in the same manner as in Example 2, except for adding no ionic liquid. The dispersion liquid contained 16.0 g of activated carbon, 2.0 g of acetylene black, and 8.0 g of silica. That is, the amount of solid particles relative to 100 parts by weight of electrode material particles was 44.4 parts by weight, and the amount of the ionic liquid relative to 100 parts by weight of the electrode material particles was 0 parts by weight. Next, in the same manner as in Example 2, electrodes were produced, an electric double layer capacitor was fabricated, and a charging/discharging test was carried out. From the relationship between a current and a voltage was approximately calculated an electrical resistance, and the result was given in Table 2. Moreover, the density of the electrode film used for the electric double layer capacitor was measured, and the result was given in Table 2.

**[Table 2]**

| | Example 2 | Example 3 | Example 4 | Example 5 | Example 6 | Comparative Example 3 |
|---|---|---|---|---|---|---|
| Electrode material particles [g] | 18.0 | 18.0 | 18.0 | 18.0 | 18.0 | 18.0 |
| Solid particles [g] | 8.0 | 8.0 | 8.0 | 8.0 | 8.0 | 8.0 |
| Ionic liquid [g] | 0.8 | 0.6 | 0.4 | 0.2 | 0.1 | 0 |
| Electrical resistance [Ω] | 26.3 | 22.4 | 10.4 | 21.8 | 43.9 | 30.3 |
| Density [g/cm³] | 0.64 | 0.72 | 0.77 | 0.80 | 0.68 | 0.64 |

### INDUSTRIAL APPLICABILITY

According to the present invention, an electrode film with a high film density and a low electrical resistance is provided. The electrode film of the present invention has an advantage of being able to be produced easily at a low cost because a compression step for increasing a film density is not needed in the its production. By the use of the electrode film of the present invention, an electrode with a high volumetric efficiency and a low resistance is provided, and furthermore an electric energy storage device with a high volumetric efficiency (typically, an electric double layer capacitor) is also provided. The electric energy storage device can be used suitably for memory back-up power sources of laptop PCs, cellular phones, and the like, auxiliary power sources of OA instruments; auxiliary power sources of motor drive systems of electric cars, hybrid cars, and fuel-cell cars, and the like.

## Claims

1. An electrode film comprising electrode material particles having an average particle diameter of Da, solid particles having an average particle diameter of Db, and an ionic liquid, wherein Da and Db satisfy a formula Db/Da ≤ 1.0 × 10⁻¹.

2. The electrode film according to claim 1, wherein Db is within the range of from 1 nm to 100 nm.

3. The electrode film according to claim 1 or 2, wherein the content of the solid particles is within the range of from 1 to 70 parts by weight relative to 100 parts by weight of the electrode material particles.

4. The electrode film of any one of claims 1 to 3, wherein the solid particles are inorganic particles.

5. The electrode film according to claim 4, wherein the inorganic particles are silica particles.

6. The electrode film according to any one of claims 1 to 5, wherein the content of the ionic liquid is within the range of from 0.01 to 8 parts by weight relative to 100 parts by weight of the electrode material particles.

7. An electrode comprising a current collector and an electrode film according to claim 1 stacked on the current collector.

8. A method for producing an electrode film according to claim 1, the method comprising:
a step of dispersing electrode material particles having an average particle diameter of Da, solid particles having an average particle diameter of Db, and an ionic liquid in a liquid medium to obtain a dispersion liquid,
a step of applying the dispersion liquid onto a support to form a dispersion liquid film,
a step of removing the liquid medium from the dispersion liquid film to form an electrode film on the support, and
a step of removing the support to isolate the electrode film.

9. The method for producing an electrode film according to claim 7, the method comprising:
a step of dispersing electrode material particles having an average particle diameter of Da, solid particles having an average particle diameter of Db, and an ionic liquid in a liquid medium to obtain a dispersion liquid,
a step of applying the dispersion liquid onto a current collector to form a dispersion liquid film, and
a step of removing the liquid medium from the dispersion liquid film to form an electrode film on the current collector.

10. An electric energy storage device comprising at least one cell comprising two electrodes arranged so that they may be opposed to each other and a separator disposed between both electrode films, an electrolyte, and a container in which the at least one cell and the electrolyte have been enclosed, wherein each of the electrodes is an electrode according to claim 7 and the two electrodes are arranged so that their electrode films may be opposed to each other.
